(19) Europäisches Patentamt / European Patent Office / Office européen des brevets

(11) **EP 4 286 076 B1**

(12) **EUROPEAN PATENT SPECIFICATION**

(45) Date of publication and mention of the grant of the patent:
**16.04.2025 Bulletin 2025/16**

(21) Application number: **21923115.6**

(22) Date of filing: **26.11.2021**

(51) International Patent Classification (IPC):
**B22F 3/11** (2006.01)   **H01M 4/88** (2006.01)
**B22F 5/00** (2006.01)   **B22F 3/10** (2006.01)

(52) Cooperative Patent Classification (CPC):
**B22F 3/11; B22F 3/1125;** B22F 5/006;
B22F 2003/1042

(86) International application number:
**PCT/JP2021/043491**

(87) International publication number:
**WO 2022/163110 (04.08.2022 Gazette 2022/31)**

(54) **METHOD FOR MANUFACTURING POROUS METAL BODY**

VERFAHREN ZUR HERSTELLUNG EINES PORÖSEN METALLKÖRPERS

PROCÉDÉ DE FABRICATION DE CORPS MÉTALLIQUE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **27.01.2021   JP 2021011554**

(43) Date of publication of application:
**06.12.2023   Bulletin 2023/49**

(73) Proprietor: **Toho Titanium CO., LTD.**
**Chigasaki-shi**
**Kanagawa 253-8510 (JP)**

(72) Inventor: **TSUMAGARI, Shougo**
**Chigasaki-shi, Kanagawa 253-8510 (JP)**

(74) Representative: **Mewburn Ellis LLP**
**Aurora Building**
**Counterslip**
**Bristol BS1 6BX (GB)**

(56) References cited:
WO-A1-2019/180797    JP-A- 2014 141 733
JP-A- H 108 107    JP-A- H 108 107
JP-A- H06 302 322    KR-A- 20120 087 414
US-A- 4 654 195    US-A- 4 999 155
US-A1- 2008 160 181    US-A1- 2010 196 778
US-A1- 2010 196 778    US-A1- 2018 161 880

## Description

[Technical Field]

The present invention relates to a method for manufacturing a porous metal body

[Background Art]

Titanium is known to be a material having excellent corrosion resistance due to the formation of a passivation film on its surface. It is expected that, utilizing such high corrosion resistance, titanium or a titanium alloy will be used, for example, as a porous conductive material that is used in an environment where it can be corroded and requires the necessary air permeability or liquid permeability. Also, in view of the price, it is considerable to adopt a porous material such as stainless steel.

As a porous conductive material having good air permeability and liquid permeability, for example, Patent Literature 1 discloses:

"A porous titanium-based sintered body, wherein it has a porosity of 50 to 75%, an average pore size of 23 to 45 $\mu$m, a specific surface area of 0.020 to 0.065 m$^2$/g and a bending strength of 22 MPa or more".

[Citation List]

[Patent Literature]

[PTL 1]

Japanese Patent Application Publication No. 2019-163503 A US 2010/0196778 A1 proposes a manufacturing method of a porous metal electrode. US 4654195 A1 proposes a method for fabricating molten carbonate ribbed anodes. KR 10-2012-0087414 A proposes a manufacturing method of a molten carbonate fuel cell electrode. US 2008/0160181 A1 proposes a manufacturing method of an electrolyte filled cathode. US 2018/0161880 A1 proposes a manufacturing method for a flexible porous metal foil. JP 410008107 A proposes a method for producing a sintered body.

[Summary of Invention]

[Technical Problem]

According to the above Patent Literature 1, a sheet-shaped porous metal body is manufactured by filling a quartz mold with titanium-based powder under dry and non-pressurized conditions, and leveling the titanium-based powder overflowing above an upper end of the mold, and then sintering the titanium-based powder in a heating furnace while filling the mold with the titanium-based powder.

When sintering a large amount of metal powder per a single sintering process in a heating furnace having a predetermined furnace internal volume, it is considered to reduce the thickness of the mold onto which the metal powder is deposited. Further, from the viewpoint of reduction of the thickness, it is also considered to replace the mold with a relatively thin flat molding plate. However, when the operation of depositing the metal powder onto the molding plate and sintering the metal powder on the molding plate in a heating furnace is repeated multiple times with the same molding plate, it is found that warping occurs so that the edge side of the repeatedly used molding plate is lifted up. Although the reason for this warping is not clear, it is believed that the metal powder on the molding plate shrinks while being bonded to the molding plate during sintering, resulting in deformation of the molding plate. It has been confirmed that the use of the warped molding plate for sintering the metal powder tends to generate a variation in thickness in the porous metal body which is a sintered body.

Therefore, in an embodiment, an object of the present invention is to provide a method for manufacturing a porous metal body, which can manufacture a porous metal body with a suppressed variation in thickness in spite of multiple use of a molding plate having a relatively thin thickness.

[Solution to Problem]

As a result of intensive studies, the inventors of the present invention have found that, even if the molding plate has been used multiple times, a good porous metal body can be manufactured by adjusting a thickness of a deposited layer formed by depositing metal powder on the molding plate while flattening the surface of the molding plate, without flattening the surface of the molding plate during sintering. The inventors have also found that such measures can be taken by using a molding plate made of carbon.

Thus, the present invention provides a method for manufacturing a porous metal body according to claim 1.

In one embodiment of the method for manufacturing a porous metal body according to the present invention, the sintering step comprises sintering the metal powder at a temperature of 800°C or more.

In one embodiment of the method for manufacturing a porous metal body according to the present invention, the sintering step comprises placing 30 or more of the molding plates in a heating furnace, and sintering the metal powder on each of the molding plates in the heating furnace.

[Advantageous Effects of Invention]

According to one embodiment of the present invention, it is possible to manufacture a porous metal body with a suppressed variation in thickness in spite of using a molding plate having a relatively thin thickness multiple times.

[Brief Description of Drawings]

[Fig. 1]

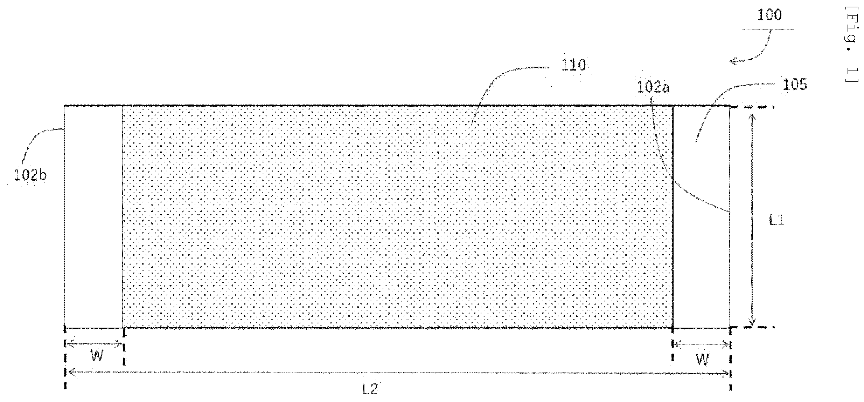

Fig. 1 is a schematic plane view for explaining a region for depositing HDH titanium powder in Examples 1 and 2 and Comparative Examples 1 to 4.
[Fig. 2]

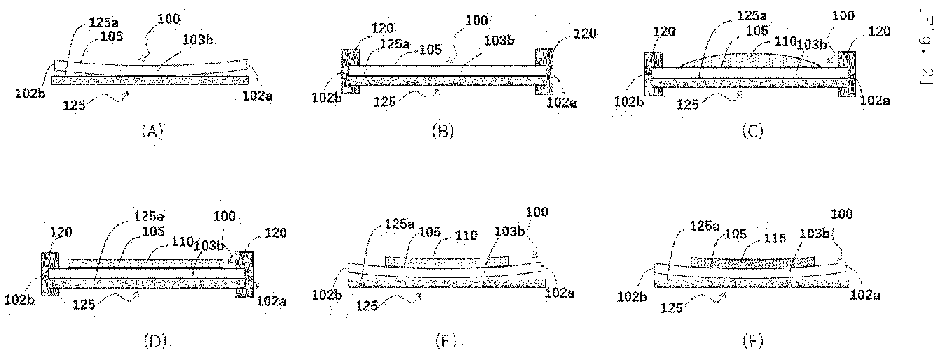

Figs. 2 (A) to (F) are diagrams for explaining a method for manufacturing a porous metal body in Examples.
[Fig. 3]

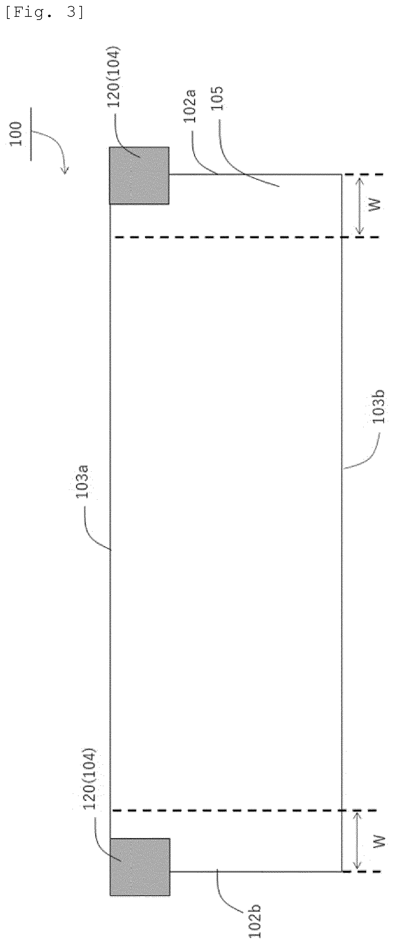

Fig 3 is a schematic plane view for explaining positions where a surface of a molding plate in each of Examples 1 and 2 and Comparative Example 4 is sandwiched by a vise.

[Description of Embodiments]

The present invention is not limited to embodiments described below. Moreover, various inventions can be formed by appropriately combining a plurality of components disclosed in each embodiment. For example, the invention may be formed by omitting some components from all the components shown in the embodiments. In addition, in the drawings, some members are schematically shown in order to facilitate understanding of the embodiments included in the invention, and illustrated sizes, positional relationships, and the like, may not necessarily be accurate.

[Method for Manufacturing Porous Metal Body]

In one embodiment, the method for manufacturing a porous metal body according to the present invention carries out a plurality of steps including a depositing step and a sintering step. In one embodiment, at least one step of the plurality of steps further includes a thickness adjusting step between the depositing step and the sintering step. The plurality of steps can manufacture porous metal bodies having substantially the same characteristic even if the same molding plate is used. It should be noted that the steps may include optional steps in addition to each of the above steps.

Preferred aspects of each step will be described below.

<Depositing Step>

In the deposition step, the metal powder is deposited in a dry process onto a molding plate made of carbon. In the depositing step, the metal powder may be deposited onto the molding plate without flattening the surface of the molding plate, or the metal powder may be deposited onto the molding plate while flattening the surface of the molding plate. That is, in order to manufacture a porous metal body with a decreased variation in thickness, it is important to adjust a thickness of a deposited layer of the metal powder, obtained by depositing the metal powder on the molding plate, while flattening the surface of the molding plate, in a thickness adjusting step as described later.

For example, if it is determined that the surface of the molding plate used in the depositing step is not flat, in the depositing step at least a part of edge portions of the surface of the molding plate are pressed downward so that the surface of the molding plate becomes flat, and in this state, the metal powder may be deposited onto the molding plate. In this case, it is preferable from the viewpoint of work simplification that the downward pressing is continued until the thickness adjustment of the deposited layer is completed. Specific pressing means include a vise and the like. A part of the molding plate may be sandwiched by the vise or the like and pressed downward so that the surface of the molding plate becomes flat. Positions where the plate is sandwiched by the vise or the like employ a part of the edge portion of the surface of the molding plate. For example, at least a part of a pair of opposing long side or short side edge portions of a rectangular molding plate in a plane view is preferably sandwiched by the vise or the like together with a pedestal member having a horizontal surface and the molding plate on the horizontal surface. For a circular or elliptical molding plate in a plane view, at least a part of the edge portions is preferably sandwiched by the vise or the like together with the pedestal member having a horizontal surface and the molding plate on the horizontal surface. For example, when there are two positions where the molding plate and the pedestal member are sandwiched by the vise or the like, the sandwiching positions may be opposed to each other via an axis of symmetry passing through the center of the surface of the molding plate or the center of gravity in a plane view, for example such that two corners 104 of a molding plate 100 may be sandwiched by the vise and pressed downward (see Fig. 3).

Further, in the depositing step, as described above, the metal powder may be deposited onto the molding plate without flattening the surface of the molding plate. In such a case, in the thickness adjusting step described later, the thickness of the deposited layer formed by depositing the metal powder onto the molding plate can be adjusted while flattening the surface of the molding plate using the vise or the like.

The depositing step also deposits the metal powder onto the molding plate in a dry process. The deposition in the dry process has an advantage of facilitating the subsequent deposition thickness adjustment, resulting in easy control of the thickness of the porous metal body. Here, the term "dry" means that liquid such as a solvent or a binder is not used. In the depositing step, the metal powder is deposited by dropping it or other means in a gas such as air or in a vacuum, rather than settling the metal powder in a slurry in which the metal powder is dispersed in a liquid. It should be noted that in this case the metal powder is not intentionally pressurized in its deposition direction.

(Molding Plate)

The molding plate is made of carbon from the viewpoint of having required flexibility (elastic deformability) and heat resistance. That is, in one embodiment, the use of such a molding plate leads to suppression of breakage or cracking in the molding plate even if the molding plate is pressed downward so that the surface of the molding plate becomes flat in the depositing step or the thickness adjusting step. Therefore, any labor for preparing a new molding plate is reduced, resulting in an improved production efficiency.

It should be noted that if a molding plate made of BN (boron nitride) or a metal oxide such as $SiO_2$ (quartz) is subjected to a plurality of sintering processes, the molding plate will be deformed due to repeated heating and cooling. However, when an attempt is made to reform the deformed molding plate made of the metal oxide such as quartz into a flat plate, breakage or cracking often occurs in the molding plate. In view of the foregoing, the molding plate made of carbon is preferable from the viewpoint of increasing the number of use of the molding plate.

The molding plate is in a form of a flat plate from the viewpoint of manufacturing a sheet-shaped porous metal body. From the viewpoint of increasing the productivity of a thinner sheet-shaped porous metal body, a mold (sometimes called a counterbore mold) in which a space for spreading the metal powder is defined on an inner side of a peripheral wall is not suitable. Since not only the plate on the bottom side but also the peripheral wall of the mold die which is the countersunk mold may be deformed, the reforming operation is complicated and disadvantageous from the viewpoint of production efficiency, or the reforming itself may not be successful.

The shape of the molding plate may be a flat plate, and the shape when observing it from the flat surface side on which the metal powder is deposited is not particularly limited. The shape of the molding plate in plane view may be, for example, a polygon including a square and a rectangle, a circle, an ellipse, or the like. Typically, the thickness of the molding plate is approximately the same over the entire region, but the thickness of the molding plate may be varied provided that the downward pressing can flatten the region where the metal powder is to be deposited.

The thickness of the molding plate is 30 mm or less from the viewpoint of production efficiency. From the viewpoint of increasing the number of use of the molding plate, the lower limit of the thickness of the molding plate is 3 mm or more. The thickness of the molding plate may be in the range of 3 mm to 15 mm, or in the range of 3 mm to 8 mm.

The surface area of the molding plate may be 36 $cm^2$ or more (for example, 6 cm x 6 cm or more) as the lower limit. The upper limit of the surface area of the molding plate is typically 15000 $cm^2$ or less, or even 5000 $cm^2$ or less. In one embodiment, for example, the molding plate having a surface area of 4500 $cm^2$ (e.g., 90 cm $\times$ 50 cm) can also be employed.

(Area of Region to be Deposited)

The area of the deposition region where the metal powder is to be deposited on the surface of the molding plate is not particularly limited as long as the area required for pressing the molding plate downward is ensured on the surface. Therefore, the area of the deposition area on which the metal powder is to be deposited is smaller than the area of the surface of the molding plate. The area of the deposition region can be appropriately adjusted depending on the dimensions of the porous metal body.

(Metal Powder)

The metal powder is a pure titanium powder. The pure titanium has a titanium content of 95% by mass or more. Since hydrogen can be reduced by sintering, the pure titanium may contain hydrogen. The pure titanium may contain hydrogen provided that the hydrogen content is 5% by mass or less.

The shape of the metal powder is not particularly limited. For example, pulverized powder such as HDH powder may be used, or atomized powder having a high degree of circularity in plane view may be used. The particle size of the metal powder can be appropriately selected, and for example, such that D50 is preferably 10 to 150 $\mu$m, and more preferably 10 to 80 $\mu$m. Also, the D50 of the metal powder is preferably 10 to 45 $\mu$m. As used herein, the term "D50" refers to a particle size where a cumulative amount counted from the smaller particle size side is 50% of the entire powder sample in a distribution on a volume basis, measured using a laser diffraction/scattering particle size distribution meter for the powder sample. The same is true for a particle size D50 of the metal powder, which will be described later.

<Thickness Adjusting Step>

In the thickness adjusting step, the thickness of the deposited layer of the metal powder deposited on the molding plate is adjusted. The thickness adjustment is typically performed in the production of the sheet-shaped porous metal body. However, if the molding plate to be used does not have a flat surface, the thickness of the deposited layer of the metal powder on the molding plate is adjusted while flattening the surface of the molding plate, thereby reducing a variation in thickness of the porous metal body manufactured. The repeated use of the molding plate may lead to a loss of flatness of the surface. Therefore, for example, after the second or later use of the molding plate, the operation of flatting the surface of the molding plate may be performed taking the shape of the molding plate into account. The operation of flattening the surface of the molding plate may be performed as described in the depositing step. Further, the operation of flattening the surface of the molding plate may be performed each time the thickness adjusting step is performed.

The thickness of the deposited layer of the metal powder deposited on the molding plate may be performed by, for example, leveling an upper surface of the metal powder using an applicator to have a sheet shape, for the deposited layer of the metal powder on the molding plate. In this case, any excess metal powder can be removed from the surface of the molding plate. Therefore, in one embodiment, the thickness adjusting step reduces a variation in thickness of the porous metal body obtained in the sintering step.

The process for adjusting the thickness includes, for example, the applicator method as described above. The applicator may be provided with a pair of sleeves arranged to face each other and a blade such as a metal blade arranged between the pair of sleeves, and the width setting and clearance (thickness) may be adjusted as needed. For the applicator, a commercially available product may be used as required.

An example of a method for adjusting the thickness of the deposited layer of the metal powder using the applicator will be described. It should be noted that the following examples are based on the premise that the shape of the molding plate when observing it from the flat surface side on which the metal powder is to be deposited is square or rectangular.

First, the molding plate having the deposited layer of the metal powder is placed on the horizontal surface of the pedestal member, and at least a part of the edge portions of the surface of the molding plate and the pedestal member are sandwiched by the vise so that the surface of the molding plate is flat, and a part of the edge portions is pressed downward. The pair of sleeves of the applicator are then placed over the surface of the molding plate to adjust the width of the applicator. Subsequently, a certain clearance is formed between the metal blade and the surface of the molding plate. Then, the thickness of the deposited layer of the metal powder is adjusted by the metal blade so to be uniform while moving the pair of sleeves of the applicator with respect to the surface of the molding plate. If the shape of the molding plate when observing it from the flat surface side is other than the square or rectangle, the thickness of the deposited layer of the metal powder can be adjusted with reference to the above descriptions. In other words, it is possible to address the shape of the molding surface by appropriately combining the setting of the applicator with the moving direction.

<Sintering Step>

After the depositing step, the sintering step is performed to sinter the metal powder on the molding plate. As a result, a porous metal body is obtained as a sintered body. The thickness of the deposited layer of the metal powder has been adjusted in the thickness adjusting step as described above. The sintering is preferably carried out using a heating furnace in order to facilitate atmosphere control of the sintering process.

In addition, when pressing is applied to the surface of the molding plate, the pressing onto the surface of the molding plate is typically released after the thickness adjusting step is completed. Therefore, the molding plate and the deposited layer of the metal powder formed on the molding plate are stored in the heating furnace.

(Heating Furnace)

The heating furnace is used for sintering the deposited metal powder, and it can be an electric heating furnace or the like, for example. During sintering in the heating furnace, a plurality of molding plates on which the metal powder has been deposited can be stacked via spacers or the like. In this case, from the viewpoint of ensuring heat transfer from the heating furnace to the metal powder on each molding plate, it is preferable to prevent the deposited layer of the metal powder on the molding plate at a lower stage from being brought into contact with the back surface of the molding plate at an upper stage.

From the viewpoint of productivity, it is preferable to place 30 or more molding plates in the heating furnace and then sintering the metal powder on each molding plate. That is, it is preferable to sinter the metal powder on the 30 or more molding plates by single heating in the heating furnace.

(Sintering Conditions)

The sintering of the metal powder can be performed in a reduced pressure atmosphere such as a vacuum or in an inert atmosphere. This can prevent the metal powder from being oxidized during sintering. More particularly, the sintering can be performed in the reduced pressure atmosphere by reaching a degree of pressure reduction in the heating furnace to $1.0 \times 10^{-2}$ Pa or less in terms of absolute pressure. Further, the sintering can be performed in the inert atmosphere while filling the heating furnace with an argon gas.

Also, the temperature inside the heating furnace when sintering the metal powder is preferably 800°C or more. From the viewpoint of powder sinterability, the lower limit of the furnace temperature is more preferably 900°C or more. The upper limit of the furnace temperature is typically 1200°C or less in terms of manufacturing costs.

Also, the retention time of the furnace temperature is, for example, 1 to 6 hours.

<Characteristics of Porous Metal Body>

In one embodiment, the porosity of the porous metal body manufactured by the method for manufacturing a porous metal body can be appropriately set. This can achieve air permeability or liquid permeability depending on the applications.

Also, the average thickness of the porous metal body is 0.1 to 1.0 mm, or, for example, 0.1 to 0.8 mm, or, for example, 0.1 to 0.5 mm.

An example of the method for measuring the average thickness is given below.

When the porous metal body has a square or rectangular shape as viewed in a plane, vertical two straight lines and horizontal two straight lines are drawn on the surface such that there are nine boxes in total adjacent to each other on the surface, and an area of each box is uniform. The thickness of the porous metal body in each box is determined by a film thickness meter, and its average value is determined to be the average thickness of the porous metal body. If the porous metal body has a circular or elliptical shape as viewed in a plane, a square or rectangle that circumscribes the circle or ellipse and has the smallest area is defined, and nine boxes are defined for the circle or ellipse in the same manner as described above, and the thickness of the porous metal body included in each box is determined by a film thickness meter, and its average value is determined to be the average thickness of the porous metal body.

Further, in one embodiment, for the variation in the thickness of the porous metal body, a variation change rate $\alpha$ represented by the following equation (1) is, for example, 2.2 or less, and preferably 1.2 or less. It should be noted that the variation change rate $\alpha$ tends to decrease as the surface of the molding plate on which the metal powder is to be deposited becomes flatter. For example, it is presumed that there is no large difference in the variation in thickness between the porous metal bodies at the first and second manufacturing processes. Therefore, for example, if a molding plate that has a lower number of use is used, the variation change rate $\alpha$ may become less than 1.0 due to measurement errors or the like, depending on the B value shown in the following equation (1):

$$\alpha = B/A \quad \text{Equation (1)}$$

in which:

$\alpha$ is the variation change rate;
A is the variation in the thickness of the porous metal body manufactured using an unused molding plate (i.e., manufactured at the first process);
B is the variation in the thickness of the porous metal body manufactured at an N+1$^{th}$ process (N is an integer equal to or greater than 1) using the same molding plate;

An example of the method for measuring the variation in the thickness is given below.

A difference between the maximum and minimum thicknesses of the nine boxes obtained by the method for measuring the average thickness as described above is determined to be the variation in the thickness of the porous metal body.

If the variation change rate α does not reach a desired value, i.e., if the variation in the thickness of the manufactured porous metal body does not fall within the desired range, nevertheless the thickness of the deposited layer of the metal powder was adjusted while flattening the surface of the molding plate using the vise or the like in the thickness adjusting step, it is preferable to replace the molding plate being used.

[Examples]

The present invention will be specifically described based on Examples. The descriptions of the following Examples are merely specific examples for facilitating understanding of the technical content of the present invention, and the technical scope of the present invention is not limited by these specific Examples.

[Example 1]

(Regarding First Manufacturing Process)

As shown in Table 1, in Example 1, a molding plate made of carbon (in a flat plate shape: 110 mm in vertical (L1) x 330 mm in horizontal (L2) x 25 mm in thickness) as shown in Fig. 1 was prepared. Subsequently, HDH titanium powder 110 (having a titanium purity of 99.9% by mass or more, and D50 of 13 μm) was deposited onto a surface 105 of a molding plate 100 in a dry process. In this case, the HDH titanium powder 110 was not deposited in the range from both edges 102a, 102b parallel to each other in the vertical direction to a position having a width W of 40 mm. The thickness of the deposited layer of the HDH titanium powder 110 deposited on the molding plate 100 was adjusted by an applicator (commercially available product) with a film thickness adjustment function in order to suppress the variation in the thickness. The molding plate 100 on which the HDH titanium powder 110 was deposited was placed in an electric heating furnace, the interior of the electric heating furnace was brought to an inert atmosphere, and sintering was performed at a furnace temperature of 1000°C for a heating retention time of 3 hours. After cooling, the sheet-shaped porous metal body was peeled off from the molding plate 100. As a result of measuring the average thickness of the resulting sheet-shaped porous metal body according to the procedure as described above, the average thickness was 0.2 mm.

(Regarding eighth Manufacturing Process)

Using the same molding plate 100, the manufacturing process of the sheet-shaped porous metal body was repeated seven times according to the above operation. In the eighth manufacturing process of the sheet-shaped porous metal body, the HDH titanium powder 110 was sintered according to the procedure as shown in Figs. 2(A) to 2(F). It should be noted that the illustrations in Figs. 2(A) to 2(F) are schematic, and the illustrated sizes and the like may not necessarily be accurate. As shown in Fig. 2(A), the molding plate 100 was placed on a horizontal surface 125a of a pedestal member 125. Subsequently, as shown in Fig. 3, on the surface 105 of the molding plate 100, two corners 104 of one edge 103a parallel to each other in the horizontal direction of the molding plate 100 are sandwiched by a vise 120 in a region where the HDH titanium powder 110 was not deposited (a range from both edges 102a, 102b parallel to each other in the vertical direction to the width W of 40 mm), so as to be downwardly pressed toward the horizontal surface 125a of the pedestal member 125. By this operation, the flatness of the surface of the molding plate 100 was improved, and it became visually flat (Fig. 2(B)). The HDH titanium powder 110 was then deposited in a dry process on the surface 105 of the molding plate 100, as shown in Fig. 2(C). Next, as shown in Fig. 2(D), the applicator was moved along the vertical direction from the side of the edge 103a sandwiched by the vise to the side of the edge 103b paired with the edge 103a to perform the adjustment such that the thickness of the deposited layer of HDH titanium powder 110 was uniform. Subsequently, as shown in Fig. 2(E), the vise 120 was removed from the molding plate 100 and the pedestal member 125. The molding plate 100 was then placed in an electric heating furnace, and the interior of the electric heating furnace was brought to an inert atmosphere, and the sintering was performed at a furnace temperature of 1000°C for a heating retention time of 3 hours. Then, as shown in Fig. 2(F), the molding plate 100 was taken out from the electric heating furnace, and the sheet-shaped porous metal body 115 was peeled off from the molding plate 100. As a result of measuring the average thickness of the resulting sheet-shaped porous metal body according to the procedure as described above, the average thickness was 0.2 mm.

The variation of the thickness for each of the sheet-shaped porous metal body manufactured in the first process and the sheet-shaped porous metal body manufactured in the eighth process was measured according to the procedure as described above, and the variation change rate $\alpha$ represented by the above equation (1) was further determined. These results are shown in Table 2. The evaluation results shown in Table 2 are based on the following determination criteria. The evaluation results "**" and "***" in Table 2 were determined to be acceptable, and "*" was determined to be unacceptable.

(Determination Criteria)

***: the case where the variation change rate $\alpha$ is 1.2 or less;
**: the case where the variation change rate $\alpha$ is more than 1.2 and 2.2 or less.
*: the case where the variation change rate $\alpha$ is more than 2.2.

[Comparative Example 1]

As shown in Table 1, Comparative Example 1 manufactured a sheet-shaped porous metal body in the same manner as in Example 1 (first manufacturing process). Then, using the same molding plate 100, the manufacturing process of the sheet-shaped porous metal body was repeated eight times by the above operation. The variation in the thickness for each of the sheet-shaped porous metal body manufactured in the first process and the sheet-shaped porous metal body manufactured in the eighth process was measured according to the procedure as described above, and the variation change rate $\alpha$ represented by the above equation (1) was further determined. These results are shown in Table 2.

[Example 2]

As shown in Table 1, Example 2 manufactured a sheet-shaped porous metal body by the same method as that of Example 1, with the exception that the thickness of the molding plate 100 was changed to 3 mm. That is, in the eighth manufacturing process, the vise was used as with Example 1. The variation in the thickness for each of the sheet-shaped porous metal body manufactured in the first process and the sheet-shaped porous metal body manufactured in the eighth process was measured according to the procedure as described above, and the variation change rate $\alpha$ represented by the above equation (1) was further determined. These results are shown in Table 2. Also, in the first and eighth manufacturing processes of Example 2, the resulting sheet-shaped porous metal bodies obtained had an average thickness of 0.2 mm, as with Example 1.

[Comparative Example 2]

As shown in Table 1, Comparative Example 2 manufactured a sheet-shaped porous metal body in the same manner as in Example 2 (first manufacturing process). Then, using the same molding plate 100, the manufacturing process of the sheet-shaped porous metal body was repeated eight times according to the above operation. The variation in the thickness for each of the sheet-shaped porous metal body manufactured in the first process and the sheet-shaped porous metal body manufactured in the eighth process was measured according to the procedure as described above, and the variation change rate $\alpha$ represented by the above equation (1) was further determined. These results are shown in Table 2.

[Comparative Example 3]

As shown in Table 1, Comparative Example 3 manufactured a sheet-shaped porous metal body by the same method as that of Example 1 (first manufacturing process), with the exception that the material of the molding plate 100 was changed to quartz. Then, using the same molding plate 100, the manufacturing process of the sheet-shaped porous metal body was repeated eight times by the above operation. The variation in the thickness for each of the sheet-shaped porous metal body manufactured in the first process and the sheet-shaped porous metal body manufactured in the eighth process was measured according to the procedure as described above, and the variation change rate $\alpha$ represented by the above equation (1) was further determined. These results are shown in Table 2.

[Comparative Example 4]

As shown in Table 1, Comparative Example 4 was carried out by the same method as that of Example 1, with the exception that the same molding plate 100 as that of Comparative Example 3 was used. However, when the molding plate 100 and the pedestal member 125 were sandwiched by the vise 120 as shown in Figures 2(B) and 3, the molding plate 100 was cracked. Therefore, a sheet-shaped porous metal body could not be manufactured. Therefore, the results of Comparative Example 4 are not shown in Table 2.

[Table 1]

| | Molding Plate | | Presence or Absence of Vise used in eighth Manufacturing Process | Remarks |
|---|---|---|---|---|
| | Material | Thickness [mm] | | |
| Example 1 | Carbon | 25 | Present | - |
| Comprative Exapmple 1 | Carbon | 25 | Absent | - |
| Example 2 | Carbon | 3 | Present | - |
| Comprative Exapmple 2 | Carbon | 3 | Absent | - |
| Comprative Exapmple 3 | Quartz | 25 | Absent | - |
| Comprative Exapmple 4 | Quartz | 25 | Present | When the molding plate and the pedestal member were sandwiched by the vise, the molding plate was cracked, and so the manufacturing of the sheet-shaped porous metal body was stopped. |

[Table 2]

| | Variation in Thickness of Sheet-Shaped Porous Metal Body | | Variation Change Rate $\alpha$ | Evaluation Results |
|---|---|---|---|---|
| | First [$\mu$m] | Eighth [$\mu$m] | | |
| Example 1 | 4 | 7 | 1.8 | ** |
| Comprative Exapmple 1 | 5 | 12 | 2.4 | * |
| Example 2 | 9 | 10 | 1.1 | * * * |
| Comprative Exapmple 2 | 10 | 31 | 3.1 | * |
| Comprative Exapmple 3 | 4 | 14 | 3.5 | * |
| Comprative Exapmple 4 | - | - | - | - |

[Discussion for Examples]

As a result of comparing Example 1 with Comparative Example 1, the variation in the thickness of the sheet-shaped porous metal body 115 manufactured in the first process in Example 1 was substantially the same as that of the sheet-shaped porous metal body manufactured in the first process in Comparative Example 1. However, the variation in the thickness of the sheet-shaped porous metal body manufactured in the eighth process in Example 1 was much smaller than that of the sheet-shaped porous metal body manufactured in the eighth process in Comparative Example 1.

Also, as a result of comparing Example 2 with Comparative Example 2, the variation in the thickness of the sheet-shaped porous metal body 115 manufactured in the first process in Example 2 was substantially the same as that of the porous metal body manufactured in the eighth process in Comparative Example 2. However, the variation in the thickness of the sheet-shaped porous metal body manufactured in the eighth process in Example 2 was much smaller than that of the sheet-shaped porous metal body manufactured in the eighth process in Comparative Example 2.

Therefore, in Examples 1 and 2, it was confirmed that even if a molding plate having a relatively thin thickness was used multiple times, it was possible to manufacture a porous metal body with a suppressed variation in thickness. Therefore, it will be appreciated that it is useful to adjust the thickness of the deposited layer formed by depositing the metal powder on the molding plate 100 while flatting the surface 105 of the molding plate.

Also, the variation change rate $\alpha$ obtained in Example 2 was smaller than that obtained in Example 1. From this result, it is considered that as the molding plate 100 is thinner, it is more effective to adjust the thickness of the deposited layer formed by depositing the metal powder on the molding plate 100 while flattening the surface 105 of the molding plate 100.

Also, in Examples 1 and 2, the thickness of the molding plate is 30 mm or less, which is not bulky even if a plurality of molding plates 100 are stacked in the heating furnace. It is, therefore, expected that a relatively large number of porous metal bodies can be manufactured per a single sintering process in the heating furnace.

In Comparative Example 4, the vise was used to flatten the surface of the molding plate, but the molding plate was cracked due to relatively low flexibility of quartz.

That is, when the results of Examples 1 and 2 are compared with Comparative Example 4, it is expected that, in terms of the number of use, the molding plate made of carbon can achieve a longer life of the molding plate.

[Description of Reference Numerals]

100 molding plate
102a, 102b, 103a, 103b edge
104 corner
105 surface
110 HDH titanium powder
115 sheet-shaped porous metal body
120 vise
125 pedestal member
125a horizontal surface
L1 vertical
L2 horizontal
W width

**Claims**

1. A method for manufacturing a porous metal body (115), the method comprising a plurality of steps including:

   a depositing step of depositing a metal powder (110) in a dry process onto a molding plate (100) made of carbon, the molding plate having a thickness of 3 mm or more and 30 mm or less and an area of a surface for depositing the metal powder of 36 cm$^2$ or more;
   after the depositing step, a sintering step of sintering the metal powder (110) on the molding plate (100), wherein the plurality of steps are performed using the same molding plate (100),
   wherein at least one step of the plurality of steps further comprises, between the depositing step and the sintering step, a thickness adjusting step of adjusting a thickness of a deposited layer of the metal powder (110) on the molding plate (100) while flattening the surface of the molding plate,
   wherein the thickness adjusting step comprises adjusting the thickness of the deposited layer of the metal powder (110) while pressing downward just the molding plate (100) at at least a part of edge portions (1024, 102b) of the surface of the molding plate so that the surface of the molding plate is flattened,
   wherein the metal powder (110) is a pure titanium powder, and
   wherein the porous metal body (115) has an average thickness of 0.1 to 1.0 mm.

2. The method for manufacturing a porous metal body (115) according to claim 1, wherein the sintering step comprises sintering the metal powder (110) at a temperature of 800°C or more.

3. The method for manufacturing a porous metal body (115) according to claim 1 or 2, wherein the sintering step comprises placing 30 or more of the molding plates (100) in a heating furnace, and sintering the metal powder (110) on each of the molding plates in the heating furnace.

**Patentansprüche**

1. Verfahren zur Herstellung eines porösen Metallkörpers (115), wobei das Verfahren eine Vielzahl von Schritten umfasst, die folgende umfassen:

einen Ablagerungsschritt des Ablagerns eines Metallpulvers (110) in einem Trockenprozess auf eine Formplatte (100) aus Carbon, wobei die Formplatte eine Dicke von 3 mm oder mehr und 30 mm oder weniger und eine Fläche einer Oberfläche zum Ablagern des Metallpulvers von 36 cm$^2$ oder mehr aufweist;

nach dem Ablagerungsschritt einen Sinterschritt des Sinterns des Metallpulvers (110) auf der Formplatte (100), wobei die Vielzahl von Schritten unter Verwendung derselben Formplatte (100) durchgeführt wird,

wobei zumindest ein Schritt aus der Vielzahl von Schritten ferner zwischen dem Ablagerungsschritt und dem Sinterschritt einen Dickenanpassungsschritt des Anpassens der Dicke einer abgelagerten Schicht des Metallpulvers (110) auf der Formplatte (100) während des Glättens der Oberfläche der Formplatte umfasst,

wobei der Dickenanpassungsschritt das Anpassen der Dicke der abgelagerten Schicht des Metallpulvers (110) während des Herabpressens nur der Formplatte (100) an zumindest einem Teil von Kantenabschnitten (1024, 102b) der Oberfläche der Formplatte umfasst, sodass die Oberfläche der Formplatte geglättet wird,

wobei das Metallpulver (100) reines Titanpulver ist und

wobei der poröse Metallkörper (115) eine mittlere Dicke von 0,1 bis 1,0 mm aufweist.

2. Verfahren zum Herstellen eines porösen Metallkörpers (115) nach Anspruch 1, wobei der Sinterschritt das Sintern des Metallpulvers (110) bei einer Temperatur von 800 °C oder mehr umfasst.

3. Verfahren zum Herstellen eines porösen Metallkörpers (115) nach Anspruch 1 oder 2, wobei der Sinterschritt das Platzieren von 30 oder mehr der Formplatten (100) in einem Heizofen und das Sintern des Metallpulvers (110) auf jeder der Formplatten im Heizofen umfasst.

## Revendications

1. Procédé de fabrication d'un corps métallique poreux (115), le procédé comprenant une pluralité d'étapes incluant :

une étape de dépôt consistant à déposer une poudre métallique (110) dans un processus à sec sur une plaque de moulage (100) réalisée en carbone, la plaque de moulage présentant une épaisseur de 3 mm ou plus et de 30 mm ou moins, et une aire d'une surface pour déposer la poudre métallique de 36 cm$^2$ ou plus ;

après l'étape de dépôt, une étape de frittage consistant à fritter la poudre métallique (110) sur la plaque de moulage (100),

dans lequel la pluralité d'étapes sont effectuées en utilisant la même plaque de moulage (100),

dans lequel au moins une étape de la pluralité d'étapes comprend en outre, entre l'étape de dépôt et l'étape de frittage, une étape d'ajustement d'épaisseur consistant à ajuster une épaisseur d'une couche de la poudre métallique (110) déposée sur la plaque de moulage (100) tout en aplatissant la surface de la plaque de moulage,

dans lequel l'étape d'ajustement d'épaisseur comprend un ajustement de l'épaisseur de la couche de la poudre métallique (110) déposée tout en appuyant vers le bas uniquement sur la plaque de moulage (100) au niveau d'au moins une partie des parties de bord (1024, 102b) de la surface de la plaque de moulage, de telle sorte que la surface de la plaque de moulage soit aplatie,

dans lequel la poudre métallique (110) est une poudre de titane pur, et

dans lequel le corps métallique poreux (115) présente une épaisseur moyenne de 0,1 à 1,0 mm.

2. Procédé de fabrication d'un corps métallique poreux (115) selon la revendication 1, dans lequel l'étape de frittage comprend un frittage de la poudre métallique (110) à une température de 800°C ou plus.

3. Procédé de fabrication d'un corps métallique poreux (115) selon la revendication 1 ou 2, dans lequel l'étape de frittage comprend un placement de 30 ou plus des plaques de moulage (100) dans un four de chauffage, et un frittage de la poudre métallique (110) sur chacune des plaques de moulage dans le four de chauffage.

[Fig. 1]

[Fig. 2]

[Fig. 3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019163503 A
- US 20100196778 A1
- US 4654195 A1
- KR 1020120087414 A
- US 20080160181 A1
- US 20180161880 A1
- JP 410008107 A